# EUROPÄISCHE PATENTSCHRIFT

(11) **EP 0 904 416 B1**
(45) Veröffentlichungstag und Bekanntmachung des Hinweises auf die Patenterteilung: **22.08.2001**
(21) Anmeldenummer: 97925762.3
(22) Anmeldetag: 09.06.1997
(51) Int. Cl.: C21B 13/14, C21B 13/00

(54) **VERFAHREN ZUM CHARGIEREN VON METALLTRÄGERN IN EINE EINSCHMELZVERGASUNGSZONE**
METHOD OF CHARGING METALLIFEROUS MATERIAL INTO A SMELTING-GASIFICATION ZONE
PROCEDE DE CHARGEMENT DE MATERIAUX METALLIFERES DANS UNE ZONE DE FUSION-GASEIFICATION

(30) Priorität: 10.06.1996 AT 100796
(43) Veröffentlichungstag der Anmeldung: 31.03.1999
(73) Patentinhaber: VOEST-ALPINE Industrieanlagenbau GmbH, A-4020 Linz (AT); POHANG IRON & STEEL CO., LTD., Pohang City, Kyong Sang Book-Do 790-785 (KR); RESEARCH INSTITUTE OF INDUSTRIAL SCIENCE & TECHNOLOGY, INCORPORATED FOUNDATION, Pohang City, Kyong Sang Book-do 790-330 (KR)
(72) Erfinder: KEPPLINGER, Leopold, Werner, A-4060 Leonding (AT); WALLNER, Felix, A-4020 Linz (AT); SCHENK, Johannes-Leopold, A-4040 Linz (AT)
(74) Vertreter: Kopecky, Helmut, Dipl.-Ing.
(86) Internationale Anmeldenummer: AT9700118
(87) Internationale Veröffentlichungsnummer: WO9747774

(56) Entgegenhaltungen:
- FR-A- 921 861
- FR-A- 1 209 963
- GB-A- 866 646
- GB-A- 1 090 826

## Beschreibung

Die Erfindung betrifft ein Verfahren zum Chargieren von einen Feinanteil enthaltenden und zumindest teilreduzierten Metallträgern, insbesondere Eisenschwamm, und Kohlenstoffträgern in einen Einschmelzvergaser, in dem eine Einschmelzvergasungszone aufrecht erhalten wird, wobei die Metallträger und die Kohlenstoffträger oberhalb der Einschmelzvergasungszone in den Einschmelzvergaser eingebracht werden und zur Einschmelzvergasungszone absinken und diese unter Bildung einer Metallschmelze, insbesondere unter Bildung einer Roheisenschmelze, und unter Erzeugung eines Reduktionsgases durch Kohlevergasung unter Sauerstoffzufuhr im unteren Bereich des Einschmelzvergasers durchwandern, sowie eine Anlage zur Durchführung des Verfahrens.

Aus der EP-B - 0 010 627 ist es bekannt, teilchenförmiges eisenhältiges Material, wie vorreduzierten Eisenschwamm, durch eine zentrale Chargieröffnung in der Haube des Einschmelzvergasers von oben zuzuführen, wobei die Teilchen in den Einschmelzvergaser durch Gravitationswirkung hineinfallen und im im Einschmelzvergaser vorhandenen Fließbett abgebremst werden. Stückige Kohle wird durch eine seitlich in der Haube des Einschmelzvergasers bzw. im den Einschmelzvergaser nach oben hin abschließenden Dom angeordnete Chargieröffhung eingebracht, u.zw. ebenfalls unter Gravitationswirkung. Das im Einschmelzvergaser gebildete Reduktionsgas wird durch die zentrale Chargieröffnung für das eisenhältige Material abgezogen.

Ein Verfahren dieser Art ist für die Verarbeitung von feinteiligen Metallträgern, insbesondere von feinteiligem Eisenschwamm, nicht geeignet, da die feinteiligen Metallträger infolge der starken Gasströmung des in der Einschmelzvergasungszone gebildeten Reduktionsgases, das durch die zentrale Chargieröffnung in der Haube bzw. im Dom des Einschmelzvergasers abgezogen wird, sofort aus dem Einschmelzvergaser ausgetragen werden würden. Ein solches Austragen der feinteiligen Metallträger wird noch durch die Temperatur im oberen Bereich des Einschmelzvergasers, d.h. im Bereich oberhalb der Einschmelzvergasungszone, begünstigt, da diese zu nieder ist, um ein Einschmelzen, d.h. ein Agglomerieren der Feinteilchen am Ort der Einbringung zu größeren Teilchen, die in die Einschmelzvergasungszone trotz des aufwärts strömenden Gases absinken könnten, sicherzustellen.

Aus der EP-A - 0 217 331 ist es bekannt, vorreduziertes Feinerz in einen Einschmelzvergaser zu leiten und mittels eines Plasmabrenners unter Zuführung kohlenstoffhältigen Reduktionsmittels fertigzureduzieren und aufzuschmelzen. Das vorreduzierte Feinerz bzw. das Eisenschwamm-Pulver wird einem im unteren Abschnitt des Einschmelzvergasers vorgesehenen Plasmabrenner zugeführt. Nachteilig ist hierbei, daß durch die Zuführung des vorreduzierten Feinerzes unmittelbar im unteren Einschmelzbereich, d.h. im Bereich der Schmelzenansammlung, ein Fertigreduzieren nicht mehr sichergestellt ist und auf keinen Fall die für eine Weiterverarbeitung des Roheisens nötige chemische Zusammensetzung erreicht werden kann. Zudem ist die Einbringung großer Mengen vorreduzierten Feinerzes wegen des im unteren Bereich des Einschmelzvergasers sich aus Kohle bildenden Fließbettes bzw. Festbettes nicht möglich, da eine ausreichende Abfuhr der Schmelzprodukte aus der Hochtemperaturzone des Plasmabrenners nicht möglich ist. Das Einbringen größerer Mengen vorreduzierten Feinerzes würde sofort zu einem thermischen und mechanischen Versagen des Plasmabrenners führen.

Aus der EP-B - 0 111 176 ist es bekannt, eine Feinkornfraktion von Eisenschwammpartikeln in den Einschmelzvergaser über ein Fallrohr zuzuleiten, das vom Kopf des Einschmelzvergasers bis in die Nähe des Kohlefließbettes ragt. Am Ende des Fallrohres ist eine Prallplatte zur Geschwindigkeitsminimierung der Feinkornfraktion vorgesehen, wodurch die Austrittsgeschwindigkeit der Feinkornfraktion aus dem Fallrohr sehr gering ist. An der Stelle der Einbringung ist die im Einschmelzvergaser herrschende Temperatur sehr niedrig, wodurch es nicht zu einem sofortigen Aufschmelzen der zugeführten Feinkornfraktion kommen kann. Dies und die niedrige Austrittsgeschwindigkeit aus dem Fallrohr bedingt, daß ein beträchtlicher Anteil der zugeführten Feinkornfraktion mit dem im Einschmelzvergaser erzeugten Reduktionsgas aus diesem wieder ausgetragen wird. Das Einbringen einer größeren Menge von einen Feinanteil enthaltenden Eisenschwammpartikeln bzw. ausschließlich einer Feinkornfraktion ist gemäß diesem Verfahren nicht möglich.

Aus der EP-A - 0 594 557 ist es bekannt, eine Eisenschwamm-Feinkornfraktion mittels eines Fördergases direkt in das im Einschmelzvergaser von der Einschmelzvergasungszone gebildete Fließbett einzubringen. Dies ist jedoch nachteilig; es kann zu einem Verstopfen des Fließbettes kommen, was zu einer ungenügenden Durchgasung und gegebenenfalls zu einem Gasstau und in der Folge davon zu eruptiven Gasdurchbrüchen führt, mit denen das verstopfte Fließbett aufgebrochen wird. Hierdurch wird der Vergasungsprozeß für die Kohlenstoffträger und auch der Einschmelzprozeß für das reduzierte Eisenerz stark gestört.

Aus der EP-A - 0 576 414 ist es bekannt, feinteilige Metallträger in die Einschmelzvergasungszone über Staubbrenner zuzuführen. Hierbei ist nachteilig, daß es in der Einschmelzvergasungszone zu Bereichen mit einem Metallüberschuß und Bereichen mit einem Kohlenstoffüberschuß kommen kann.

Gemäß der AT-B - 390.622 erfolgt das Einblasen einer Feinkornfraktion in das Festbett eines Einschmelzvergasers, wobei das Festbett wie ein Filter wirkt. Hierdurch wird die Gasdurchlässigkeit verringert, und es kann als Folge davon zu Gasausbrüchen kommen.

Aus der GB-A-1 090 826 ist ein Verfahren bekannt, bei dem Eisenerz in einer von oben auf ein in einer Schmelzkammer befindliches Schmelzbett gerichteten Sauerstoff-Brennstoffflamme aufgeschmolzen wird und die Erzschmelze anschließend in eine Reduktionskammer überführt und dort reduziert wird. Wird ein dort erwähnter Kohlebrenner verwendet, so ist ein zentraler Strom der Metallträger von Mänteln aus Staubkohle und Sauerstoff umgeben.

Die Erfindung bezweckt die Vermeidung der oben genannten Nachteile und Schwierigkeiten und stellt sich die Aufgabe, ein Verfahren der eingangs beschriebenen Art sowie eine Anlage zur Durchführung des Verfahrens zu schaffen, bei welchen ein Verarbeiten von feinteilchenförmigen Metallträgern, ohne ein Brikettieren zu erfordern, möglich ist und hierbei einerseits ein Austragen der zugeführten Feinteilchen, gegebenenfalls im vorreduzierten oder im fertigreduzierten Zustand, durch das im Einschmelzvergaser erzeugte Reduktionsgas zuverlässig vermieden wird und andererseits ein gegebenenfalls erforderliches Fertigreduzieren der Feinteilchen gesichert ist. Weiters soll erfindungsgemäß eine möglichst gleichmäßige Verteilung der Metallträger und der Kohlenstoffträger im Fließbett der Einschmelzvergasungszone erreicht werden.

Diese Aufgabe wird erfindungsgemäß dadurch gelöst, daß sowohl die Kohlenstoffträger als auch die Metallträger zentral oberhalb der Einschmelzvergasungszone in den Einschmelzvergaser eingebracht werden, vorzugsweise gravitierend, wobei eine zentrale Strähne von Metallträgern gebildet wird, die peripher von einer von den Kohlenstoffträgern gebildeten Mantelsträhne umgeben ist.

Durch eine dichte Ausbildung eines Mantels, gebildet von Kohienstoffträgern, um die zentrale Strähne von Metallträgern wird ein Staubverlust des Feinanteiles der Metallträger, d.h. ein Austragen dieses Feinanteiles mit dem im Einschmelzvergaser gebildeten Reduktionsgas, verhindert.

Gemäß einer bevorzugten Ausführungsform wird die von den Kohlenstoffträgern gebildete Mantelsträhne von mehreren eng benachbarten Strähnen von Kohlenstoffträgern gebildet. Hierbei kann durch entsprechende Anordnung der von Kohlenstoffträgern gebildeten Strähnen der Aufbau des Fließbettes im Einschmelzvergaser beeinflußt werden, d.h. es kann gezielt eine größere Menge von Kohlenstoffträgern in den Zentralbereich oder auch in den Randbereich des Fließbettes aufgegeben werden.

Vorzugsweise werden die über eine Zeiteinheit chargierten Mengen von Kohlenstoffträgern und/oder Metallträgern variiert, wobei vorteilhaft
- das Variieren der pro Zeiteinheit chargierten Mengen von Metallträgern und Kohlenstoffträgern derart erfolgt, daß die Menge der chargierten Metallträger reduziert wird und gleichzeitig die Menge der chargierten Kohlenstoffträger etwa gleich bleibt oder erhöht wird, oder
- umgekehrt die Menge der chargierten Kohlenstoffträger reduziert wird und gleichzeitig die Menge der chargierten Metallträger etwa gleich bleibt oder erhöht wird, oder
- die Menge der chargierten Metallträger etwa gleich bleibt und die Menge der Kohlenstoffträger erhöht wird, oder
- daß umgekehrt die Menge der Kohlenstoffträger etwa gleich bleibt und die Menge der Metallträger erhöht wird.
   Hierdurch läßt sich der Aufbau der Vergasungszone auch schichtenweise beeinflussen.

Eine Anlage zur Durchführung des Verfahrens mit einem Einschmelzvergaser, der Zuleitungen für sauerstoffhältige Gase und Kohlenstoffträger und zumindest teilreduzierte Metallträger aufweist und von dem eine Gasableitung für Reduktionsgas vom Bereich eines den Einschmelzvergaser nach oben hin abschließenden Domes ausgeht, und der einen Abstich für eine Metallschmelze, insbesondere für Roheisen und Schlacke, aufweist, wobei die Zuführung für sauerstoffhältige Gase im unteren Bereich des Einschmelzvergasers angeordnet ist, ist dadurch gekennzeichnet, daß zentral im Dom des Einschmelzvergasers eine Chargiereinrichtung sowohl für Kohlenstoffträger als auch Metallträger vorgesehen ist, die ein Zentralrohr für die Zuführung der Metallträger sowie eine eine Mantelsträhne um das Zentralrohr bildende Kohlenstoffträger-Zuführung aufweist.

Vorzugsweise ist die Kohlenstoffträger-Zuführung von einem das Zentralrohr unter Freilassung eines Ringspaltes peripher umgebenden Mantelrohr gebildet.

Eine bevorzugte Ausführungsform ist dadurch gekennzeichnet, daß die Kohlenstoffträger-Zuführung von mehreren peripher um das Zentralrohr im engen Abstand zu diesem angeordneten Zuführrohren gebildet ist, wobei vorteilhaft der freie Abstand zwischen den Zuführrohren und der freie Abstand von den Zuführrohren zum Zentralrohr kleiner ist als der Durchmesser eines Zuführrohres, vorzugsweise kleiner als der halbe Durchmesser eines Zuführrohres.

Um einen besonders dichten Mantel, der die zentrale, von Metallträgern gebildete Strähne sehr eng umgibt, zu erzielen, konvergieren die Zuführrohre für den Kohlenstoffträger vorteilhaft in Durchströmrichtung der Kohlenstoffträger zueinander und auch gegen das Zentralrohr.

Zweckmäßig ist die Austrittsöffnung vom Zentralrohr auf einem höheren Niveau angeordnet als die Austrittsöffnung(en) der Kohlenstoffträger-Zuführung.

Eine weitere bevorzugte Ausführungsform ist dadurch gekennzeichnet, daß sowohl die Kohlenstoffträger-Zuführung als auch das Zentralrohr von mit einer Innenkühlung versehenen Rohren gebildet sind.

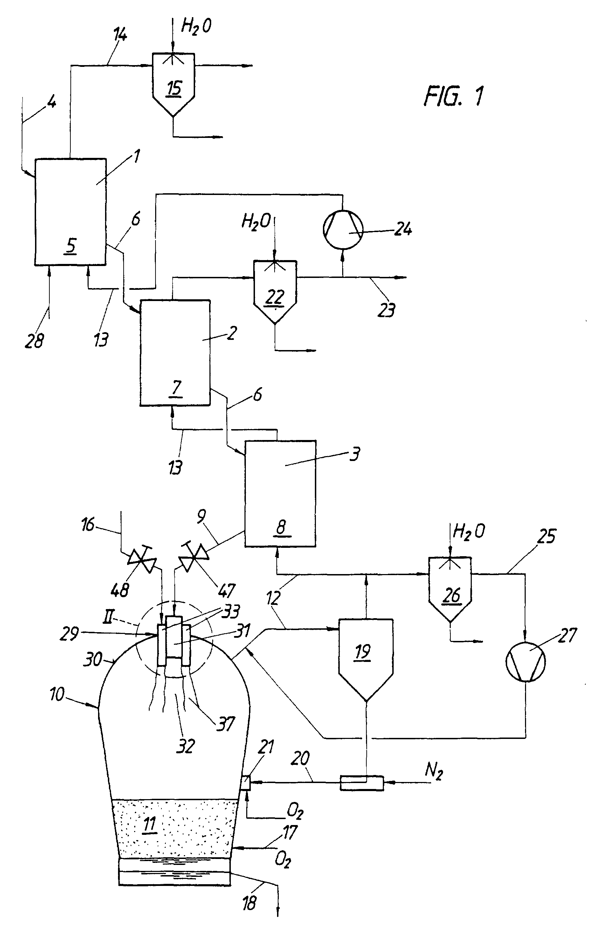

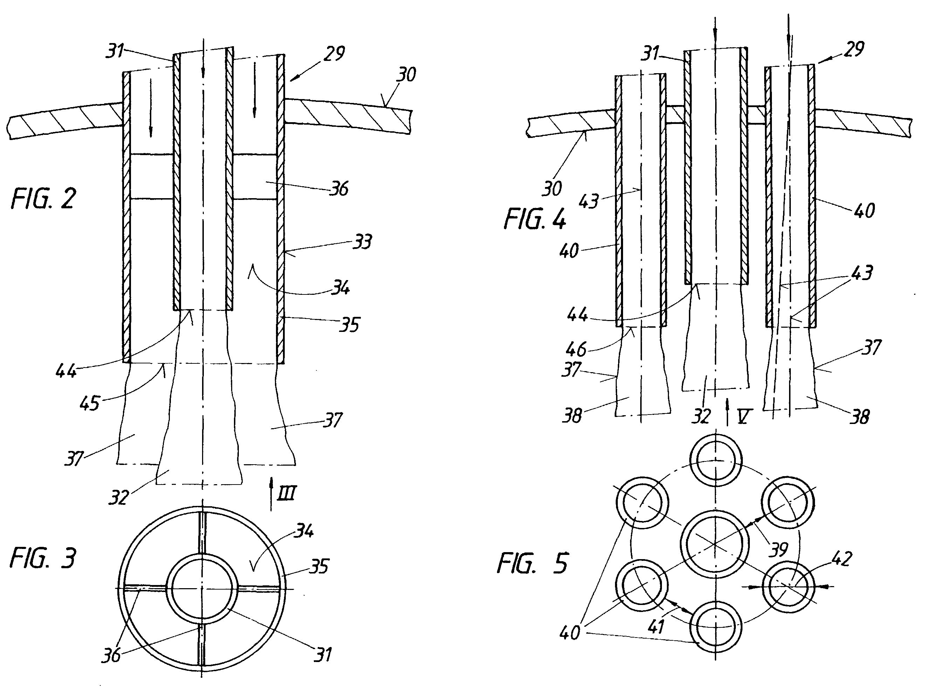

Die Erfindung ist nachfolgend anhand mehrerer in der Zeichnung dargestellter Ausführungsbeispiele näher erläutert, wobei Fig. 1 eine Gesamtanlage zum Herstellen von flüssigem Roheisen oder flüssigen Stahlvorprodukten aus Eisenerz in schematischer Darstellung zeigt. Die Fig. 2 und 3 zeigen ein Detail des Einschmelzvergasers im Vertikalschnitt sowie in Ansicht in Richtung des Pfeiles III der Fig. 2; die Fig. 4 und 5 zeigen in zu den Fig. 2 und 3 analoger Darstellung eine weitere Ausführungsform der Erfindung.

Die erfindungsgemäße Anlage weist drei in Serie hintereinander geschaltete Wirbelschichtreaktoren 1 bis 3 auf, wobei eisenoxidhaltiges Material, wie Feinerz, über eine Erzzuleitung 4 dem ersten Wirbelschichtreaktor 1, in dem in einer Vorwärmstufe 5 eine Vorerwärmung des Feinerzes und eventuell eine Vorreduktion stattfindet, zugeleitet und anschließend von Wirbelschichtreaktor 1 zu Wirbelschichtreaktor 2, 3 über Förderleitungen 6 geleitet wird. In dem Wirbelschichtreaktor 2 erfolgt in einer Vor-Reduktionsstufe 7 eine Vorreduktion und im Wirbelschichtreaktor 3 in einer End-Reduktionsstufe 8 eine End- bzw. Fertig-Reduktion des Feinerzes zu Eisenschwamm.

Das fertig reduzierte Material, also der Eisenschwamm, wird über eine Förderleitung 9 in einen Einschmelzvergaser 10 geleitet, u.zw. in einer bestimmten Art und Weise, wie sie später noch beschrieben wird. Im Einschmelzvergaser 10 wird in einer von einem Festbett und/oder Fließbett gebildeten Einschmelzvergasungszone 11 aus Kohle und sauerstoffhältigem Gas ein CO- und H₂-hältiges Reduktionsgas erzeugt, das über die Reduktionsgas-Zuleitung 12 in den in Fließrichtung des Feinerzes letztangeordneten Wirbelschichtreaktor 3 eingeleitet wird. Vorzugsweise ist die Einschmelzvergasungszone 11 von einem sich über den größten Teil der Einschmelzvergasungszone 11 erstreckenden Festbett gebildet, das von einem Fließbett geringer Höhe bedeckt ist. Das Reduktionsgas wird dann im Gegenstrom zum Erzdurchfluß von Wirbelschichtreaktor 3 zu Wirbelschichtreaktor 2 bis 1 geführt, u.zw. über die Verbindungsleitungen 13, aus dem Wirbelschichtreaktor 1 als Topgas über eine Topgas-Ableitung 14 abgeleitet und anschließend in einem Naßwäscher 15 gekühlt und gewaschen.

Der Einschmelzvergaser 10 weist eine Zuführung 16 für feste Kohlenstoffträger, eine Zuführung 17 für sauerstoffhältige Gase sowie gegebenenfalls Zuführungen für bei Raumtemperatur flüssige oder gasförmige Kohlenstoffträger, wie Kohlenwasserstoffe, sowie für gebrannte Zuschläge auf. In dem Einschmelzvergaser 10 sammelt sich unterhalb der Einschmelzvergasungszone 11 schmelzflüssiges Roheisen bzw. schmelzflüssiges Stahlvormaterial und schmelzflüssige Schlacke, die über einen Abstich 18 abgestochen werden.

In der Reduktionsgas-Zuleitung 12, die vom Einschmelzvergaser 10 ausgeht und in den Wirbelschichtreaktor 3 mündet, ist eine Entstaubungseinrichtung 19, wie ein Heißgaszyklon, vorgesehen, wobei die in diesem Zyklon abgeschiedenen Staubteile dem Einschmelzvergaser 10 über die Rückleitung 20 mit Stickstoff als Fördermittel und über einen Brenner 21 unter Einblasen von Sauerstoff zugeführt werden.

Der Wirbelschichtreaktor 2, in dem die Vorreduktion des Feinerzes stattfindet, wird mit einer viel geringeren Menge an Reduktionsgas, das zudem ein geringeres Reduktionspotential aufweist, versorgt, was jedoch für die Vor-Reduktion durchaus ausreichend ist. Da hier der erreichte Reduktionsgrad des zu reduzierenden Materials niedriger ist als in der End-Reduktionsstufe 8, tritt hier kein "sticking" auf. Das aus dem Wirbelschichtreaktor 2 austretende umgesetzte Reduktionsgas wird über die Leitung 13 einem Wäscher 22 zugeführt. Ein Teil des gewaschenen umgesetzten Reduktionsgases wird über eine Exportgas-Ableitung 23 abgezogen; ein anderer Teil der Vorerwärmungsstufe 5, d.h. dem Wirbelschichtreaktor 1, über die Leitung 13 über einen Verdichter 24 zugeführt.

Eine Möglichkeit zur Einstellung der Reduktionsgastemperatur ergibt sich durch die vorzugsweise vorgesehene Gasrückführleitung 25, die von der Reduktionsgas-Zuleitung 12 ausgeht und einen Teil des Reduktionsgases über einen Wäscher 26 und einen Verdichter 27 in diese Reduktionsgas-Zuleitung 12 wiederum zurückführt, u.zw. vor der Anordnung des Heißgaszyklons 19.

Zur Einstellung der Vorerwärmungstemperatur des Feinerzes kann der Vorerwärmungsstufe 5, also dem Wirbelschichtreaktor 1, ein sauerstoffhältiges Gas, wie Luft oder Sauerstoff, über eine Leitung 28 zugeführt werden, wodurch eine Teilverbrennung des der Vorerwärmungsstufe 5 zugeführten umgesetzten Reduktionsgases stattfindet.

Erfindungsgemäß erfolgt die Chargierung des Eisenschwammes und der Kohlenstoffträger über eine eigene Chargiereinrichtung 29, die in zwei Varianten in den Fig. 2 bis 5 näher dargestellt ist.

Die Chargiereinrichtung 29 weist ein im den Einschmelzvergaser 10 nach oben hin abschließenden Dom 30 des Einschmelzvergasers 10 zentrisch angeordnetes Zentralrohr 31 für die Zuführung des Eisenschwammes auf, der unter Gravitationswirkung in den Einschmelzvergaser 10 unter Bildung einer Strähne 32 fällt. Gemäß der in Fig. 2 dargestellten Ausführungsform ist das Zentralrohr 31 von einer Kohlenstoffträger-Zuführung 33 umgeben, die von einem das Zentralrohr 31 unter Freilassung eines Ringspaltes 34 umgebenden Mantelrohr 35 gebildet ist. Das Zentralrohr 31 stützt sich am am Dom 30 befestigten Mantelrohr 35 über Radialstreben 36 ab. Über den Ringspalt 31 erfolgt die Zugabe der Kohlenstoffträger, die dann eine Mantelsträhne 37 bilden, die die zentrale Strähne 32 des Eisenschwammes geschlossen umgibt.

Die von den Kohlenstoffträgern gebildete Mantelsträhne 37 bildet einen Schutz für die zentrale, von ihr umschlossene Strähne 32 gebildet von Eisenschwamm, so daß ein Staubverlust von Eisenschwamm vermieden wird. Die Kohlenstoffträger und der Eisenschwamm sinken bis zur Einschmelzvergasungszone 11 ab und durchwandern diese, wobei es zum Aufschmelzen - gegebenenfalls nach einer Fertigreduktion - des Eisenschwammes sowie zum Vergasen der Kohlenstoffträger kommt.

Gemäß der in den Fig. 4 und 5 dargestellten Ausführungsform wird die Mantelsträhne 37 von mehreren eng benachbarten Strähnen 38 von Kohlenstoffträgern gebildet. Gemäß dieser Ausführungsform ist die Kohlenstoffträger-Zuführung 33 von mehreren, das Zentralrohr 31 im engen Abstand 39 umgebenden Zuführrohren 40 gebildet. Die Distanz 39, 41 der Zuführrohre 40 untereinander und vom Zentralrohr 31 beträgt etwas weniger als das Maß eines Durchmessers 42 eines Zuführrohres 40; vorzugsweise ist die Distanz 39, 41 kleiner als der halbe Durchmesser 42 eines Zuführrohres 40.

Soll gemäß dieser Ausführungsform eine besonders dichte Mantelsträhne 37 von Kohlenstoffträgern um die zentrale Strähne 32 aus Eisenschwamm gebildet werden, sind zweckmäßig die Achsen 43 der Zuführrohre 40 gegen das Zentralrohr 31 geneigt gerichtet, d.h. die Zuführrohre 40 konvergieren in Flußrichtung der Kohlenstoffträger zueinander und auch zum Zentralrohr 31, wie dies beispielsweise mit strichlierten Linien für eines der Zuführrohre 40 in Fig. 4 veranschaulicht ist.

Die Austrittsöffnung 44 des Zentralrohres 31 befindet sich auf einem höheren Niveau als die Austrittsöffnung 45 des Mantelrohres 35 gemäß Fig. 2 und auch höher als die Austrittsöffnungen 46 der Zuführrohre 40 gemäß Fig. 4. Sämtliche Rohre 31, 35, 40 sind vorzugsweise mit einer Flüssigkeitsinnenkühlung versehen, was jedoch nicht näher dargestellt ist.

Sowohl die Förderleitung 9 für den Eisenschwamm als auch die Zuführung 16 für feste Kohlenstoffträger sind mit Mengenstellorganen 47, 48 ausgerüstet, so daß die pro Zeiteinheit chargierte Menge eingestellt werden kann. Hierdurch läßt sich im Festbett der Einschmelzvergasungszone 11 ein schichtweiser Aufbau bzw. eine gleichmäßige Verteilung der Kohlenstoffträger und des Eisenschwammes erzielen.

Die Erfindung beschränkt sich nicht auf die in der Zeichnung dargestellten Ausführungsbeispiele, sondern kann in verschiedener Hinsicht modifiziert werden. Beispielsweise ist es möglich, das Zentralrohr 31 mit einem Mantelrohr 35 zu umgeben, ähnlich wie in Fig. 2 dargestellt, aus dem jedoch die Kohlenstoffträger unter Bildung mehrerer Kohlenstoffsträhnen durch Bodenöffnungen eines stirnseitig des Mantelrohres 35 angeordneten Bodens austreten. Die Erfindung läßt sich weiters unabhängig von der Art der Vor- und/oder Fertigreduktion verwirklichen.

## Patentansprüche

1. Verfahren zum Chargieren von einen Feinanteil enthaltenden und zumindest teilreduzierten Metallträgern, insbesondere Eisenschwamm, und Kohlenstoffträgern in einen Einschmelzvergaser (10), in dem eine Einschmelzvergasungszone (11) aufrecht erhalten wird, wobei die Metallträger und die Kohlenstoffträger oberhalb der Einschmelzvergasungszone (11) in den Einschmelzvergaser (10) eingebracht werden und zur Einschmelzvergasungszone (11) absinken und diese unter Bildung einer Metallschmelze, insbesondere unter Bildung einer Roheisenschmelze, und unter Erzeugung eines Reduktionsgases durch Kohlevergasung unter Sauerstoffzufuhr im unteren Bereich des Einschmelzvergasers (10) durchwandern, dadurch gekennzeichnet, daß sowohl die Kohlenstoffträger als auch die Metallträger zentral oberhalb der Einschmelzvergasungszone (11) in den Einschmelzvergaser eingebracht werden, vorzugsweise gravitierend, wobei eine zentrale Strähne (32) von Metallträgern gebildet wird, die peripher von einer von den Kohlenstoffträgern gebildeten Mantelsträhne (37) umgeben ist.

2. Verfahren nach Anspruch 1, dadurch gekennzeichnet, daß die von den Kohlenstoffträgern gebildete Mantelsträhne (37) von mehreren eng benachbarten Strähnen (38) von Kohlenstoffträgern gebildet wird (Fig. 4).

3. Verfahren nach Anspruch 1 oder 2, dadurch gekennzeichnet, daß die über eine Zeiteinheit chargierten Mengen von Kohlenstoffträgern und/oder Metallträgern variiert werden.

4. Verfahren nach Anspruch 3, dadurch gekennzeichnet,
• daß das Variieren der pro Zeiteinheit chargierten Mengen von Metallträgern und Kohlenstoffträgern derart erfolgt, daß die Menge der chargierten Metallträger reduziert wird und gleichzeitig die Menge der chargierten Kohlenstoffträger etwa gleich bleibt oder erhöht wird, oder
• daß umgekehrt die Menge der chargierten Kohlenstoffträger reduziert wird und gleichzeitig die Menge der chargierten Metallträger etwa gleich bleibt oder erhöht wird, oder
• daß die Menge der chargierten Metallträger etwa gleich bleibt und die Menge der Kohlenstoffträger erhöht wird, oder
• daß umgekehrt die Menge der Kohlenstoffträger etwa gleich bleibt und die Menge der Metallträger erhöht wird.

5. Anlage zur Durchführung des Verfahrens nach einem oder mehreren der Ansprüche 1 bis 4, mit einem Einschmelzvergaser (10), der Zuleitungen (17, 16, 9) für sauerstoffhältige Gase und Kohlenstoffträger und zumindest teilreduzierte Metallträger aufweist und von dem eine Gasableitung (12) für Reduktionsgas vom Bereich eines den Einschmelzvergaser (10) nach oben hin abschließenden Domes (30) ausgeht, und der einen Abstich (18) für eine Metallschmelze, insbesondere für Roheisen und Schlacke, aufweist, wobei die Zuführung (17) für sauerstoffhältige Gase im unteren Bereich des Einschmelzvergasers (10) angeordnet ist, dadurch gekennzeichnet, daß zentral im Dom (30) des Einschmelzvergasers (10) eine Chargiereinrichtung (29) sowohl für Kohlenstoffträger als auch Metallträger vorgesehen ist, die ein Zentralrohr (31) für die Zuführung der Metallträger sowie eine eine Mantelsträhne (37) um das Zentralrohr (31) bildende Kohlenstoffträger-Zuführung (33) aufweist.

6. Anlage nach Anspruch 5, dadurch gekennzeichnet, daß die Kohienstoffträger-Zuführung (33) von einem das Zentralrohr (31) unter Freilassung eines Ringspaltes (34) peripher umgebenden Mantelrohr (35) gebildet ist (Fig. 2, 3).

7. Anlage nach Anspruch 5, dadurch gekennzeichnet, daß die Kohlenstoffträger-Zuführung (33) von mehreren peripher um das Zentralrohr (31) im engen Abstand (39) zu diesem angeordneten Zuführrohren (40) gebildet ist (Fig. 4, 5).

8. Anlage nach Anspruch 7, dadurch gekennzeichnet, daß der freie Abstand (41) zwischen den Zuführrohren und der freie Abstand (39) von den Zuführrohren (40) zum Zentralrohr (31) kleiner ist als der Durchmesser (42) eines Zuführrohres (40), vorzugsweise kleiner als der halbe Durchmesser (42) eines Zuführrohres (40).

9. Anlage nach Anspruch 7 oder 8, dadurch gekennzeichnet, daß die Zuführrohre (40) für die Kohlenstoffträger in Durchströmungsrichtung der Kohlenstoffträger zueinander und gegen das Zentralrohr (31) konvergieren.

10. Anlage nach einem oder mehreren der Ansprüche 5 bis 9, dadurch gekennzeichnet, daß die Austrittsöffnung (44) vom Zentralrohr (31) auf einem höheren Niveau angeordnet ist als die Austrittsöffnung(en) (46) der Kohlenstoffträger-Zuführung (33).

11. Anlage nach einem oder mehreren der Ansprüche 5 bis 10, dadurch gekennzeichnet, daß sowohl die Kohlenstoffträger-Zuführung (33) als auch das Zentralrohr (31) von mit einer Innenkühlung versehenen Rohren gebildet sind.

## Claims

1. A method of charging metal carriers, in particular sponge iron, which contain a portion of fines and are at least partially reduced and carbon carriers into a melter gasifier (10) in which a melt-down gasifying zone (11) is maintained, wherein the metal carriers and the carbon carriers are fed into the melter gasifier (10) above the level of the melt-down gasifying zone (11) and descend to the melt-down gasifying zone (11) and travel through the same forming a metal melt, particularly forming a pig iron melt, and producing a reducing gas by coal gasification under oxygen supply in the lower area of the melter gasifier (10), characterized in that both the carbon carriers and the metal carriers are introduced into the melter gasifier centrally above the melt-down gasifying zone (11), preferably gravitationally, with a central strand (32) of metal carriers being formed which is peripherally surrounded by a jacket strand (37) formed by the carbon carriers.

2. A method according to claim 1, characterized in that the jacket strand (37) formed by the carbon carriers is formed by several closely adjacent strands (38) of carbon carriers (Fig. 4).

3. A method according to claim 1 or 2, characterized in that the amounts of carbon carriers and/or metal carriers charged over a unit of time are varied.

4. A method according to claim 3, characterized in that
• the variations in the amounts of metal carriers and carbon carriers charged per unit of time are effected in such a manner that the amount of metal carriers charged is reduced and at the same time the amount of carbon carriers charged remains roughly the same or is increased, or that
• conversely, the amount of carbon carriers charged is reduced and at the same time the amount of metal carriers charged remains roughly the same or is increased, or that
• the amount of metal carriers charged remains roughly the same and the amount of carbon carriers is increased, or that
• conversely, the amount of carbon carriers remains roughly the same and the amount of metal carriers is increased.

5. A plant for carrying out the method according to one or several of claims 1 to 4, comprising a melter gasifier (10) which has feed ducts (17, 16, 9) for oxygen-containing gases and carbon carriers and at least partially reduced metal carriers and from which a gas discharge duct (12) for reducing gas from the area of a dome (30) terminating the melter gasifier (10) toward the top departs, and which is provided with a tap (18) for a metal melt, in particular for pig iron and slag, the feed duct (17) for oxygen-containing gases being arranged in the lower area of the melter gasifier (10), characterized in that centrally inside the dome (30) of the melter gasifier (10) a charging unit (29) both for carbon carriers and metal carriers is provided which has a central pipe (31) for feeding the metal carriers as well as a feed duct (33) for carbon carriers which forms a jacket strand (37) around the central pipe (31).

6. A plant according to claim 5, characterized in that the feed duct (33) for carbon carriers is formed by a jacket pipe (35) that surrounds the central pipe (31) peripherally while leaving an annular gap (34) (Fig. 2, 3).

7. A plant according to claim 5, characterized in that the feed duct (33) for carbon carriers is formed by several feeding pipes (40) that are arranged peripherally around the central pipe (31) at a close distance (39) from the same (Fig. 4, 5).

8. A plant according to claim 7, characterized in that the free distance (41) between the feeding pipes and the free distance (39) from the feeding pipes (40) to the central pipe (31) are smaller than the diameter (42) of a feeding pipe (40), preferably smaller than half the diameter (42) of a feeding pipe (40).

9. A plant according to claim 7 or 8, characterized in that the feeding pipes (40) for the carbon carriers converge toward one another and toward the central pipe (31) in the direction in which the carbon carriers flow through.

10. A plant according to one or several of claims 5 to 9, characterized in that the outlet opening (44) of the central pipe (31) is arranged at a higher level than the outlet opening(s) (46) of the feed duct (33) for carbon carriers.

11. A plant according to one or several of claims 5 to 10, characterized in that both the feed duct (33) for carbon carriers and the central pipe (31) are formed by pipes that are provided with an internal cooling.

## Revendications

1. Procédé pour le chargement de produits d'apport de métal qui contiennent une proportion de produits finis et au moins partiellement réduits, en particulier de la mousse de fer, et des produits d'apport de carbone, dans un gazéificateur de fusion (10) dans lequel on maintient une zone de gazéification de fusion (11), dans lequel les produits d'apport de métal et les produits d'apport de carbone sont amenés dans le gazéificateur de fusion (10) au-dessus de la zone de gazéification de fusion (11) et descendent en direction de cette zone de gazéification de fusion (11) et traversent celle-ci en formant un métal en fusion, en particulier en formant une fonte de fer brut, et en produisant un gaz de réduction par gazéification du carbone avec admission d'oxygène dans la région inférieure du gazéificateur (10), caractérisé en ce que les produits d'apport de métal ainsi que les produits d'apport de carbone sont amenés dans le gazéificateur de fusion au centre au-dessus de la zone de gazéification de fusion (11), de préférence sous l'effet de la gravité, de sorte qu'il se forme une mèche centrale (32) de produits d'apport de métal entourée à la périphérie pas une mèche enveloppe (37) formée par les produits d'apport de carbone.

2. Procédé selon la revendication 1, caractérisé en ce que la mèche enveloppe (37) formée par les produits d'apport de carbone est formée par plusieurs mèches (38) étroitement voisines de produits d'apport de carbone (figure 4).

3. Procédé selon l'une ou l'autre des revendications 1 et 2, caractérisé en ce que l'on fait varier les quantités chargées de produits d'apport de carbone et/ou de produits d'apport de métal au cours d'une unité de temps.

4. Procédé selon la revendication 3, caractérisé en ce que :
- la variation des quantités chargées par unité de temps de produits d'apport de métal et de produits d'apport de carbone a lieu de telle manière que la quantité des produits d'apport de métal chargée est réduite et que simultanément la quantité des produits d'apport de carbone chargée reste approximativement égale ou augmentée, ou
- au contraire la quantité des produits d'apport de carbone chargée est réduite et simultanément la quantité des produits d'apport de métal chargée reste approximativement égale ou augmentée, ou bien
- la quantité des produits d'apport de métal chargée reste approximativement égale et la quantité des produits d'apport de carbone est augmentée, ou
- au contraire, la quantité des produits d'apport de carbone reste approximativement égale et la quantité des produits d'apport de métal est augmentée.

5. Installation pour mettre en oeuvre le procédé selon l'une ou plusieurs des revendications 1 à 4, comprenant un gazéificateur de fusion (10), qui comprend des conduites d'amenée (17, 16, 9) pour des gaz contenant de l'oxygène, pour des produits d'apport de carbone, et pour des produits d'apport de métal au moins partiellement réduits, et duquel part une conduite d'évacuation de gaz (12) pour des gaz de réduction depuis la région d'une coupole (30) qui referme le gazéificateur de fusion (10), et qui comprend une prise de coulée (18) pour une fonte de métal, en particulier pour du fer brut et du laitier, dans laquelle l'admission (17) pour des gaz contenant de l'oxygène est agencée dans la région inférieure du gazéificateur de fusion (10),
caractérisée en ce qu'il est prévu au centre dans la coupole (30) du gazéificateur de fusion (10) un dispositif de chargement (29) à la fois pour les produits d'apport de carbone et pour les produits d'apport de métal, qui comporte un tube central (31) pour l'admission des produits d'apport de métal, ainsi qu'une admission (33) pour les produits d'apport de carbone, laquelle forme autour du tube central (31) une mèche enveloppe (37).

6. Installation selon la revendication 5, caractérisée en ce que l'admission (33) pour les produits d'apport de carbone est formée par un tube enveloppe (35) qui entoure en le tube central (31) en laissant libre une fente annulaire (34) en périphérie (figures 2 et 3).

7. Installation selon la revendication 5, caractérisée en ce que l'admission (33) pour les produits d'apport de carbone est formée par plusieurs tubes d'admission (40) agencés en périphérie autour du tube central (31) et à faible distance (38) de celui-ci (figures 4 et 5).

8. Installation selon la revendication 7, caractérisé en ce que la distance libre (41) entre les tubes d'admission et la distance libre (39) entre les tubes d'admission (40 ) et le tube central (31) est inférieure au diamètre (42) d'un tube d'admission (40), et de préférence inférieure à la moitié du diamètre (42) d'un tube d'admission (40).

9. Installation selon l'une ou l'autre des revendications 7 et 8, caractérisée en ce que les tubes d'admission (40) pour les produits d'apport de carbone convergent les uns vers les autres dans la direction de traversée des produits d'apport de carbone, ainsi que vers le tube central (31).

10. Installation selon l'une ou plusieurs des revendications 5 à 9, caractérisée en ce que l'ouverture de sortie (44) depuis le tube central (31) est agencée à un niveau supérieur à celui de la ou des ouvertures de sortie (46) de l'admission (33) pour les produits d'apport de carbone.

11. Installation selon l'une ou plusieurs des revendications 5 à 10, caractérisée en ce que l'admission (33) pour les produits d'apport de carbone ainsi que le tube central (31) sont formés par des tubes dotés d'un refroidissement intérieur.
